# EUROPÄISCHE PATENTSCHRIFT

(11) **EP 3 383 612 B1**
(45) Veröffentlichungstag und Bekanntmachung des Hinweises auf die Patenterteilung: **09.07.2025**
(21) Anmeldenummer: 16793873.7
(22) Anmeldetag: 09.11.2016
(51) Int. Cl.: B29C 44/04, B29C 44/12, B29C 44/56, B29C 37/00, B29L 31/30, B29K 75/00

(54) **VERFAHREN ZUR WAHLWEISEN HERSTELLUNG EINER ERSTEN BZW. EINER ZWEITEN VARIANTE EINES MEHRSCHICHTIGEN KUNSTSTOFFBAUTEILS**
METHOD FOR SELECTIVELY PRODUCING A FIRST OR A SECOND VARIANT OF A MULTI-LAYER PLASTIC COMPONENT
PROCÉDÉ POUR PRODUIRE SÉLECTIVEMENT UNE PREMIÈRE OU UNE DEUXIÈME VARIANTE D'UNE PIÈCE PLASTIQUE À PLUSIEURS COUCHES

(30) Priorität: 02.12.2015 DE 102015223961
(43) Veröffentlichungstag der Anmeldung: 10.10.2018
(73) Patentinhaber: Bayerische Motoren Werke Aktiengesellschaft, 80809 München (DE)
(72) Erfinder: DIETL, Florian, 94374 Schwarzach (DE); KURZ, Ralph, 94437 Mamming (DE)
(86) Internationale Anmeldenummer: PCT/EP2016/077028
(87) Internationale Veröffentlichungsnummer: WO 2017/092984

(56) Entgegenhaltungen:
- WO-A1-86/05439
- DE-A1- 102009 050 620
- DE-A1- 102011 005 343
- JP-A- 2001 009 956
- US-A- 5 252 270
- US-A1- 2015 321 397

## Beschreibung

Die vorliegende Erfindung betrifft ein Verfahren zur wahlweisen Herstellung einer ersten bzw. einer zweiten Variante eines mehrschichtigen Verkleidungsteils gemäß dem Oberbegriff des Patentanspruches 1.

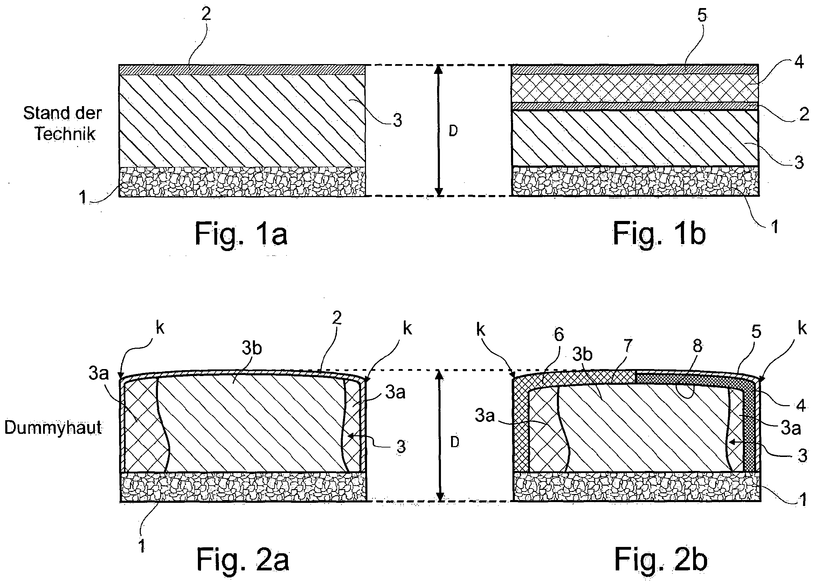

Manche Fahrzeugtypen der Marke BMW werden mit unterschiedlichen Instrumententafelvarianten angeboten, nämlich mit einer Basisvariante und einer Sonderausstattungsvariante. Beiden Varianten gemeinsam ist ihr mehrschichtiger Aufbau bestehend aus einem Trägerteil, einer Dekorschicht und einer dazwischen befindlichen Schaumschicht. Figur 1a zeigt eine Basisvariante und Figur 1b eine Sonderausstattungsvariante, welche dieselbe Gesamtdicke D wie die Basisvariante aufweist. Wie aus den Figuren 1a, 1b ersichtlich ist, ist das Trägerteil 1 der Basisvariante identisch mit dem Trägerteil 1 der Sonderausstattungsvariante. Bei der Basisvariante der Figur 1a ist eine relativ dünne Dekorschicht 2 aus Kunststoff vorgesehen, die an ihrer Oberseite z.B. mit einer lederartigen Narbung versehen sein kann. Der Zwischenraum zwischen dem Trägerteil 1 und der dünnen "Kunststoffhaut 2" ist durch eine (Halb-)hartschaumschicht 3 gebildet.

Die Sonderausstattungsvariante der Figur 1b weist eine etwas dünnere Schaumschicht 3 auf, auf die ebenfalls eine am fertigen Bauteil von außen nicht mehr sichtbare Kunststoffhaut 2 aufgebracht ist, für deren Herstellung ein separates Werkzeug erforderlich ist, was mit entsprechend hohem Aufwand verbunden ist. Auf die Kunststoffhaut 2 ist eine zweischichtige Dekorschicht aufgebracht, die aus einer schubelastischen Schicht 4 und einer Lederschicht 5 gebildet ist. Die schubelastische Schicht 4 kann durch ein "Abstandsgewirke" gebildet sein.

Bei der Herstellung der beiden in den Figuren 1a, 1b gezeigten Varianten wird das Trägerteil 1 in eine obere Werkzeughälfte und die Formhaut 2 in eine untere Werkzeughälfte eines Formwerkzeugs eingebracht. Anschließend wird der Zwischenraum ausgeschäumt. Da die Schaumschicht 3 der in Figur 1b gezeigten Sonderausstattungsvariante geringer ist als die der in Figur 1a gezeigten Basisvariante, wird für jede der beiden Varianten ein separates Werkzeug benötigt, was mit hohen Kosten verbunden ist. Die bei der Sonderausstattungsvariante der Figur 1b verwendete Formhaut ist zwar am fertigen Produkt von außen nicht mehr erkennbar, wird aber nach bisherigem Kenntnisstand benötigt, da das Abstandsgewirk 4 nicht unmittelbar in das Schäumwerkzeug eingelegt werden kann, da ansonsten der Kunststoffschaum in das Abstandsgewirk 4 eindringen und dieses verhärten würde.

Aus der Offenlegungsschrift DE 10 2009 050 620 A1, die den Oberbegriff des Anspruchs 1 offenbart, ist ein Verfahren zur Wahlweisen Herstellung einer ersten bzw. einer zweiten Variante eines mehrschichtigen Kunststoffbauteils bekannt.

Die DE 10 2011 005 343 A1, betrifft ein Innenausstattungsteil für ein Fahrzeug, insbesondere ein Kraftfahrzeug, aufweisend eine Trägerschicht und eine Dekorschicht sowie eine zwischen der Dekorschicht und der Trägerschicht angeordnete Haptikschicht.

Aus der WO 86/05439 ist ein Verfahren und eine Vorrichtung bekannt, zur Herstellung von Bauteilen aus geschäumte Kunststoffmaterial.

Aus der JP 2001 009 956 A ist ein Interieurbauteil und ein Verfahren zu dessen Herstellung bekannt.

Bei den aus dem Stand der Technik bekannten Verfahren zur Herstellung von Interieurbauteilen bzw. Verkleidungsbauteil wird eine Schaumoberfläche mit einem Oberflächenschicht versehen. Diese Oberflächenschicht kann dabei als Dekorfolie oder als Kunst- sowie Echtlederschicht ausgebildet sein. Da der Schaumstoff sehr nachgiebig ist, können keine markanten Konturen auf der Oberfläche des Bauteils erzeugt werden.

Aufgabe der Erfindung ist es, ein Verfahren zur wahlweisen Herstellung einer ersten bzw. einer zweiten Variante eines mehrschichtigen Verkleidungsteils anzugeben, das Kostenvorteile gegenüber bekannten Verfahren bietet. Es ist eine spezielle Aufgabe der Erfindung ein Verfahren anzugeben mit dem verschiedene Ausführungen von Kunststoffbauteilen auf einfache Weise erzeugt werden können.

Diese Aufgabe wird durch die Merkmale des Anspruchs 1 gelöst. Vorteilhafte Ausgestaltungen und Weiterbildungen der Erfindung sind den Unteransprüchen zu entnehmen.

Ausgangspunkt der Erfindung ist ein Verfahren zur wahlweisen Herstellung einer ersten bzw. einer zweiten Variante eines mehrschichtigen Verkleidungsteils, wie z.B. einer Instrumententafelabdeckung für den Fahrgastraum eines Fahrzeugs. Beide Varianten weisen jeweils ein Trägerteil, eine "Dekorschicht" und eine zwischen dem Trägerteil und der Dekorschicht befindliche Schaumschicht auf. Der Begriff "Dekorschicht" ist so zu verstehen, dass es sich um einzige Schicht oder um eine aus mehreren Teilschichten aufgebaute Dekorschicht handeln kann. In einer ersten Ausführungsform des Verfahrens kann eine erste Variante, beispielsweise eine Basisvariante (Serienausstattung) hergestellt werden. Gemäß einer zweiten Ausführungsform des Verfahrens kann eine andere Variante, beispielsweise eine Sonderausstattungsvariante erzeugt werden.

Aus Design-Gründen sollen jedoch beide Varianten exakt oder zumindest annähernd dieselbe Oberflächenkontur (gleiche Krümmungsradien etc.) aufweisen.

Beide Varianten können sogar dieselbe Gesamtdicke aufweisen, wobei die Dicke der Dekorschicht der ersten Variante kleiner als die Dicke der Dekorschicht der zweiten Variante ist und die Dicke der Schaumschicht der ersten Variante dementsprechend größer als die Dicke der Schaumschicht der zweiten Variante ist.

Die Schaumschicht wird in einem Schäumwerkzeug hergestellt, das eine erste Werkzeughälfte aufweist, in welche vor Beginn des Schäumvorgangs das Trägerteil eingebracht wird. Das Trägerteil kann beispielsweise in eine obere Werkzeughälfte des Schäumwerkzeugs eingebracht und mittels Unterdruck an der oberen Werkzeughälfte gehalten, d.h. "nach oben gesaugt" werden.

Der Kern der Erfindung liegt darin, dass die Schaumschicht mehrere Bereiche aufweist, mit verschiedenen Konturfestigkeiten bzw. Konturstabilitäten. In vorbestimmten Bereichen des Verkleidungsteils, in denen deutliche Konturen auf der Oberfläche gewünscht sind, werden Schaumschichtbereiche mit hoher Konturstabilität erzeugt. Dadurch kann in den übrigen Bereichen, in denen eine nachgiebige Oberfläche gewünscht ist eine weich anmutende Haptik beibehalten werden. Ein erfindungsgemäßes Verkleidungsteil zeichnet sich somit durch gut ausgeprägte Charakterlinien bei gleichzeitig nachgiebiger Haptik aus.

Zur Erreichung dieser konturstabilen Eigenschaften können in den verschiedenen Bereichen Schaummaterialien mit unterschiedlichen Härtegraden verwendet werden. Dies kann einerseits durch die Verwendung verschiedener Materialien erreicht werden. Andererseits kann auch in beiden Bereichen Polyurethan (PUR) verwendet werden. In letzterem Fall werden die Materialeigenschaften des Polyurethans durch entsprechende Einstellung derer einzelner Bestandteile erzielt.

Zuerst wird eine erste Komponente auf die Dekoschicht oder die Trägerschicht aufgebracht. Diese Komponente wird auf Bereiche aufgesprüht, die im fertigen Bauteil den konturstabilen Bereichen entsprechen sollen. Anschließend wird eine zweite Komponente aufgesprüht auf solche Bereiche, die im fertigen Verkleidungsbauteil Bereiche mit nachgiebiger Haptik darstellen sollen. Danach wird das Werkzeug geschlossen und in einem Schäumvorgang die Schaumschicht ausgebildet.

Gemäß der ersten Ausführungsform wird zur Herstellung der ersten Variante vor dem Schäumvorgang die Dekorschicht der ersten Variante in eine zweite, z.B. untere Werkzeughälfte des Schäumwerkzeugs eingebracht. Gemäß der zweiten Ausführungsform wird zur Herstellung der zweiten Variante des Kunststoffbauteils vor dem Schäumvorgang eine "Abstandshalterschicht" in die zweite Werkzeughälfte des Schäumwerkzeugs eingebracht, wobei die Abstandshalterschicht nach dem Schäumvorgang von der Schaumschicht entfernt und die Dekorschicht der zweiten Variante auf die Schaumschicht aufgebracht wird.

Auf diese Weise können zwei oder mehrere unterschiedliche Varianten eines mehrschichtigen Kunststoffbauteils, dessen Dicken einzelner Schichten sich unterscheiden können, deren Gesamtdicke jedoch identisch oder annähernd gleich sein kann, mittels ein- und desselben Schäumwerkzeugs gefertigt werden. Alternativ dazu kann jede Variante in einem gesonderten, eigenen Schäumwerkzeug gefertigt werden.

Die Abstandshalterschicht, auch Dummyhaut genannt, wird mit Trennmittel auf dessen Rückseite behandelt. Die Rückseite entspricht dabei einer Seite der Abstandshalterschicht, mit der diese mit einer Werkzeughälfte in berührendem Kontakt kommt. Durch das Einbringen der Abstandshalterschicht in das Werkzeug wird eine offsetierte Oberfläche zur Oberfläche des Werkzeugs erzeugt. Die Abstandshalterschicht dient während der Herstellung einer Schaumstruktur zur Substitution von Oberflächenschichten, die erst nach der Fertigstellung der Schaumstruktur auf die Schaumstruktur aufgebracht werden. Solche Oberflächenschichten können z.B. aus Leder, Kunstleder oder ähnlichen Materialien ausgebildet sein. Nach dem Aufbringen der Oberflächenschicht entsteht somit kein Übermaß verglichen mit einer Variante in der die Oberflächenschicht aus einer Folie ausgebildet ist und dadurch wesentlich dünner ausfällt.

Die Abstandshalterschicht wird vorzugsweise wieder verwendet, d.h. zur Herstellung einer Vielzahl zweiter Varianten des Kunststoffbauteils verwendet. Sie sollte aus einem Material beschaffen sein, das eine gewisse Elastizität aufweist, so dass die Abstandshalterschicht von der Schaumschicht abziehbar ist, ohne dass die Schaumschicht beschädigt wird. Versuche haben gezeigt, dass eine Abstandshalterschicht aus Silikon bzw. aus einem silikonhaltigen Material hierfür sehr gut geeignet ist, wobei ein "Verkleben" der Schaumschicht mit der Abstandshalterschicht vermieden wird. Eine Abstandshalterschicht aus Silikon bzw. aus einem silikonhaltigen Material kann absolut rückstandslos von der Schaumschicht abgezogen werden. Die Abstandshalterschicht kann jedoch auch aus anderen Materialien ausgebildet sein, ohne die Erfindung zu verlassen.

Bei der Schaumschicht kann es sich um eine Polyurethanschaumschicht handeln.

Weiterhin kann das Trägerteil im Wesentlichen aus expandiertem Polypropylen ausgebildet sein.

Im Folgenden wird die Erfindung im Zusammenhang mit der Zeichnung näher erläutert. Es zeigen in beispielhafter, schematischer Ansicht:
- Figur 1a: Eine erste Variante eines mehrschichtigen Kunststoffbauteils gemäß dem Stand der Technik;
- Figur 1b: eine zweite Variante eines mehrschichtigen Kunststoffbauteils gemäß dem Stand der Technik;
- Figur 2a, 2b: zwei Varianten eines mehrschichtigen Kunststoffbauteils.

Die Figuren 2a, 2b zeigen zwei verschiedene Varianten eines mehrschichtigen Kunststoffbauteils.

Eine erste Ausführungsform der Erfindung, soll anhand der Figur 2a erläutert werden. Figur 2a zeigt analog Figur 1a eine Basisvariante umfassend ein Trägerteil 2, eine durch eine Formhaut gebildete Dekorschicht 2 und eine dazwischen befindliche, das Trägerteil 1 und die Dekorhaut 2 verbindenden Halbhartschaumschicht 3, die z.B. aus Polyurethan bestehen kann. In ihren Randbereichen weist diese Schaumschicht 3 formstabile Bereiche 3a auf. Ein mittlerer Bereich 3b ist weicher bzw. nachgiebiger ausgebildet als die formstabilen Randbereiche 3a. Das mehrschichtige Kunststoffbauteil der Figur 2a weist eine Gesamtdicke D auf. Aufgrund der formstabilen Bereiche 3a können auf der sichtbaren Oberfläche der Dekorschicht 2 Konturen k erzeugt werden, die sich besonders deutlich abzeichnen.

Eine zweite Ausführungsform der Erfindung, soll anhand der Figur 2b erläutert werden. Figur 2b zeigt eine Sonderausstattungsvariante, bei der dasselbe Trägerteil 1 wie bei der Basisvariante verwendet wird. Alternativ dazu kann jedoch auch ein beliebiges anderes Trägerteil 1 verwendet werden. Bei der Herstellung wird zunächst das Trägerteil 1 in ein Oberwerkzeug eines Schäumwerkzeugs eingebracht und dort z.B. mittels Unterdruck gehalten. In das Unterwerkzeug des Schäumwerkzeugs (nicht dargestellt) wird eine Abstandshalterschicht 6 eingelegt, die aus einem Silikonwerkstoff hergestellt ist. Analog zu der mit Bezug zu Figur 2a erläuterten Ausführungsform, wird auch hier eine Schaumschicht 3 erzeugt, die formstabilere Bereiche 3a und weichere Bereich 3b umfasst. Auch in dieser zweiten Ausführungsform sind die härteren Bereiche 3a am Rand des Bauteils vorgesehen und der nachgiebigere Bereich 3b im mittleren Bereich des Bauteils. Zur Herstellung dieser Bereiche wird zunächst eine erste Komponente bzw. ein erstes Material auf das Trägerteil 1 oder die Abstandshalterschicht 6 aufgesprüht, in den Bereichen, in denen am fertigen Bauteil erste Bereiche 3a gebildet werden sollen. Danach wird eine zweite Komponente bzw. ein zweites Material auf das Trägerteil 1 oder die Abstandshalterschicht 6 aufgesprüht, in den Bereichen, in denen am fertigen Bauteil zweite Bereiche 3b gebildet werden. Nach dem Schließen des Schäumwerkzeugs wird der Zwischenraum zwischen dem Trägerteil 1 und der Abstandshalterschicht 6 ausgeschäumt, wodurch sich die Schaumschicht 3 mit den ersten Bereichen 3a und den zweiten Bereichen 3b ergibt. Wie aus den Figuren 2a, 2b ersichtlich ist, ist die Schaumschicht 3 der in Figur 2b gezeigten Variante etwas dünner als die Schaumschicht 3 der in Figur 2a gezeigten Basisvariante.

Nach dem Schäumen der Schaumschicht 3 wird das Schäumwerkzeug geöffnet und das hinterschäumte Trägerteil 1 entnommen. Nach dem Entnehmen wird die elastische Abstandshalterschicht 6 abgezogen. Da die Abstandshalterschicht 6 aus einem Silikonmaterial besteht, klebt die Schaumschicht 3 nicht bzw. nur unwesentlich an der Abstandshalterschicht 6. Die Abstandshalterschicht 6 kann dementsprechend rückstandslos abgezogen werden, ohne dass dadurch die Oberseite 7 der Schaumschicht 3 beschädigt wird.

Bei dem hier gezeigten Ausführungsbeispiel ist die Abstandshalterschicht 6 gerade so dick wie die durch das Abstandsgewirk 4 und die Lederschicht 5 gebildete Dekorschicht. Nach dem Abziehen der "Silikonschicht 6" wird die durch die beiden Schichten 4, 5 gebildete Dekorschicht mit der Unterseite 8 des Abstandsgewirks 4 auf die Oberseite 7 der Schaumschicht 6 aufgeklebt, wodurch sich die fertige Instrumententafelverkleidung in ihrer Sonderausstattungsvariante mit Lederbezug ergibt. Analog zu der Basisvariante hat auch die in Figur 2b dargestellte Ausführungsform charakteristische Konturen k. In diesem Bereich wird die Dekorschicht durch den formstabilen Bereich 3a gestützt, so dass sich gut abgesetzte Konturlinien auf der Oberfläche der Dekorschicht abzeichnen.

Wie aus den Figuren 2a, 2b ersichtlich ist, haben bei dem hier gezeigten Ausführungsbeispiel sowohl die Basisvariante als auch die Sonderausstattungsvariante dieselbe Gesamtdicke D. Beide Varianten müssen aber nicht zwingend dieselbe Gesamtdicke D aufweisen.

Alternativ zu einer "zweilagigen", aus den beiden Schichten 4, 5 gebildeten Dekorschicht könnte für die zweite Variante auch eine "einlagige Dekorschicht" verwendet werden, die sich von der Dekorschicht der ersten Variante unterscheidet. Denkbar ist beispielsweise eine Kunst- oder Naturlederschicht, deren Dicke z.B. im Bereich zwischen 1,0mm und 2mm liegt, oder eine Kunststoffhaut, die eine andere Beschaffenheit und/oder eine andere Dicke als die Dekorschicht der ersten Variante aufweist.

Die Erfindung bietet den Vorteil, dass Konturen, die in einem CAD System erzeugt werden, mit hoher Detailtreue am realen Bauteil abgebildet werden können. Die ist möglich aufgrund der Verwendung von formstabilen, bzw. harten Schaumaterialien in den Bereichen des Verkleidungsteils in dem Konturen dargestellt werden sollen. In diesen Bereichen gibt die Schaumschicht bei dem Aufbringen der Dekorschicht nicht nach. Ein weiterer Vorteil der Erfindung ist darin zu sehen, dass eine hohe Spaltmaßgüte zu benachbarten Anbauteilen hin erzielbar ist und damit gute Spaltbilder erzeugt werden. Durch die Verwendung verschiedener Schaumaterialen in den unterschiedlichen Bereichen 3a, 3b der Schaumschicht 3 können verschieden Oberflächenanforderungen wie z.B. Konturstabilität, Konturtreue, Härte usw.

## Patentansprüche

1. Verfahren zur wahlweisen Herstellung einer ersten bzw. einer zweiten Variante eines mehrschichtigen Kunststoffbauteils in Form eines Verkleidungsteils mittels ein- und desselben Schäumwerkzeugs, wobei
- beide Varianten jeweils ein Trägerteil (1) eine Dekorschicht (2; 4, 5) und eine zwischen dem Trägerteil und der Dekorschicht (2; 4, 5) befindliche Schaumschicht (3) aufweisen,
- die Schaumschicht (3) in einem Schäumwerkzeug hergestellt wird, das eine erste Werkzeughälfte aufweist, in welche vor dem Schäumvorgang das Trägerteil (1) eingebracht wird,
wobei
zur Herstellung der ersten Variante vor dem Schäumvorgang die Dekorschicht (2) der ersten Variante in eine zweite Werkzeughälfte des Schäumwerkzeugs eingebracht wird und
zur Herstellung der zweiten Variante vor dem Schäumvorgang eine Abstandshalterschicht (6) in die zweite Werkzeughälfte des Schäumwerkzeugs eingebracht wird, wobei die Abstandshalterschicht (6) nach dem Schäumvorgang von der Schaumschicht (3) entfernt und die Dekorschicht (4, 5) der zweiten Variante auf die Schaumschicht (3) aufgebracht wird,
**dadurch gekennzeichnet, dass**
die Schaumschicht (3) mindestens einen ersten Abschnitt (3a) umfasst, der eine höhere Konturstabilität als ein zweiter Abschnitt (3b) aufweist, und dass zur Erzeugung des ersten Abschnitts ein formstabiles Schaummaterial verwendet wird.

2. Verfahren nach Anspruch 1, **dadurch gekennzeichnet, dass** der erste Bereich (3a) der Schaumschicht (3) eine höhere Härte als der zweite Bereich (3b) der Schaumschicht (3) aufweist, wobei zur Erzeugung des ersten Abschnitts ein hartes Schaummaterial verwendet wird.

3. Verfahren nach einem der vorhergehenden Ansprüche, **dadurch gekennzeichnet, dass**
zur Herstellung der Bereiche (3a, 3b) der Schaumschicht (3) verschiedene Materialien verwendet werden.

4. Verfahren nach einem der vorhergehenden Ansprüche, **dadurch gekennzeichnet, dass**
zur Herstellung des ersten Bereichs (3a) und zur Herstellung des zweiten Bereichs (3b) Polyurethan verwendet wird, wobei sich die Materialkennwerte des Polyurethan in den verschiedenen Bereichen unterscheiden.

5. Verfahren nach einem der vorhergehenden Ansprüche, **dadurch gekennzeichnet, dass** beide Varianten ein und dieselbe Gesamtdicke (D) aufweisen.

6. Verfahren nach einem der vorhergehenden Ansprüche, **dadurch gekennzeichnet, dass** die Dicke der Dekorschicht (2) der ersten Variante kleiner als die Dicke der Dekorschicht (4, 5) der zweiten Variante und die Dicke der Schaumschicht (3) der ersten Variante größer als die Dicke der Schaumschicht (3) der zweiten Variante ist.

7. Verfahren nach einem der vorhergehenden Ansprüche, **dadurch gekennzeichnet, dass** die Abstandshalterschicht (6) zur Herstellung einer Vielzahl zweiter Varianten des Kunststoffbauteils verwendet wird.

8. Verfahren nach einem der vorhergehenden Ansprüche,
**dadurch gekennzeichnet, dass** die Dekorschicht (2) der ersten Variante eine Kunststoffhaut ist.

9. Verfahren nach einem der vorhergehenden Ansprüche,
**dadurch gekennzeichnet, dass** die Dekorschicht (4, 5) der zweiten Variante eine untere, der Schaumschicht (3) zugewandte elastische Schicht (4) und eine obere, mit der elastischen Schicht (4) verbundene Kunst- oder Echtlederschicht (5) aufweist oder dass es sich bei der Dekorschicht der zweiten Variante um eine einlagige Schicht aus Kunst- oder Naturleder handelt.

10. Verfahren nach einem der vorhergehenden Ansprüche,
**dadurch gekennzeichnet, dass** die Dekorschicht (4, 5) der zweiten Variante auf die Schaumschicht (3) aufgeklebt wird.

## Claims

1. Method for selectively producing a first or a second variant of a multi-layered plastics component in the form of a trim part by means of one and the same foaming tool, wherein
- the two variants each comprise a carrier part (1), a decorative layer (2; 4, 5) and a foam layer (3) between the carrier part and the decorative layer (2; 4, 5),
- the foam layer (3) is produced in a foaming tool having a first tool half into which the carrier part (1) is inserted before the foaming operation,
wherein
to produce the first variant, prior to the foaming operation the decorative layer (2) of the first variant is inserted into a second tool half of the foaming tool and
to produce the second variant, prior to the foaming operation a spacer layer (6) is inserted into the second tool half of the foaming tool, wherein the spacer layer (6) is removed from the foam layer (3) after the foaming operation and the decorative layer (4, 5) of the second variant is applied to the foam layer (3),
**characterized in that**
the foam layer (3) has at least one first portion (3a) which has a more stable contour than a second portion (3b) and **in that** a dimensionally stable foam material is used to create the first portion.

2. Method according to Claim 1, **characterized in that** the first region (3a) of the foam layer (3) has a higher hardness than the second region (3b) of the foam layer (3), wherein a hard foam material is used to create the first portion.

3. Method according to either of the preceding claims, **characterized in that**
various materials are used to produce the regions (3a, 3b) of the foam layer (3).

4. Method according to either of the preceding claims, **characterized in that**
polyurethane is used to produce the first region (3a) and to produce the second region (3b), with a distinction being made between the material characteristics of the polyurethane in the various regions.

5. Method according to one of the preceding claims, **characterized in that** the two variants have one and the same overall thickness (D).

6. Method according to one of the preceding claims, **characterized in that** the thickness of the decorative layer (2) of the first variant is smaller than the thickness of the decorative layer (4, 5) of the second variant and the thickness of the foam layer (3) of the first variant is greater than the thickness of the foam layer (3) of the second variant.

7. Method according to one of the preceding claims, **characterized in that** the spacer layer (6) is used to produce a multiplicity of second variants of the plastics component.

8. Method according to one of the preceding claims, **characterized in that** the decorative layer (2) of the first variant is a plastics skin.

9. Method according to one of the preceding claims, **characterized in that** the decorative layer (4, 5) of the second variant has a lower elastic layer (4) facing towards the foam layer (3) and an upper, imitation leather or genuine leather layer (5) connected to the elastic layer (4) or **in that** the decorative layer of the second variant is a single-ply layer made of imitation or natural leather.

10. Method according to one of the preceding claims, **characterized in that** the decorative layer (4, 5) of the second variant is adhesively bonded to the foam layer (3).

## Revendications

1. Procédé de fabrication sélective d'une première ou d'une deuxième variante d'un composant en matière plastique multicouche sous la forme d'une partie d'habillage au moyen d'un seul et même outil de moussage,
- les deux variantes présentant chacune une partie support (1), une couche décorative (2 ; 4, 5) et une couche de mousse (3) se trouvant entre la partie support et la couche décorative (2 ; 4, 5),
- la couche de mousse (3) étant fabriquée dans un outil de moussage qui présente une première moitié d'outil dans laquelle la partie support (1) est introduite avant le processus de moussage,
dans lequel
pour la fabrication de la première variante, la couche décorative (2) de la première variante est introduite dans une deuxième moitié de l'outil de moussage avant le processus de moussage, et
pour la fabrication de la deuxième variante, une couche d'espacement (6) est introduite dans la deuxième moitié de l'outil de moussage avant le processus de moussage, la couche d'espacement (6) étant retirée de la couche de mousse (3) après le processus de moussage et la couche décorative (4, 5) de la deuxième variante étant appliquée sur la couche de mousse (3),
**caractérisé en ce que**
la couche de mousse (3) comprend au moins une première section (3a) qui présente une stabilité de contour plus élevée qu'une deuxième section (3b), et **en ce qu'**un matériau en mousse de forme stable est utilisé pour produire la première section.

2. Procédé selon la revendication 1, **caractérisé en ce que**
la première zone (3a) de la couche de mousse (3) présente une dureté supérieure à celle de la deuxième zone (3b) de la couche de mousse (3), un matériau de mousse dur étant utilisé pour produire la première section.

3. Procédé selon l'une quelconque des revendications précédentes, **caractérisé en ce que**
différents matériaux sont utilisés pour fabriquer les zones (3a, 3b) de la couche de mousse (3).

4. Procédé selon l'une quelconque des revendications précédentes, **caractérisé en ce que**
du polyuréthane est utilisé pour fabriquer la première zone (3a) et pour fabriquer la deuxième zone (3b), les caractéristiques de matériau du polyuréthane étant différentes dans les différentes zones.

5. Procédé selon l'une quelconque des revendications précédentes, **caractérisé en ce que** les deux variantes présentent une seule et même épaisseur totale (D).

6. Procédé selon l'une quelconque des revendications précédentes, **caractérisé en ce que** l'épaisseur de la couche décorative (2) de la première variante est inférieure à l'épaisseur de la couche décorative (4, 5) de la deuxième variante et l'épaisseur de la couche de mousse (3) de la première variante est supérieure à l'épaisseur de la couche de mousse (3) de la deuxième variante.

7. Procédé selon l'une quelconque des revendications précédentes, **caractérisé en ce que** la couche d'espacement (6) est utilisée pour fabriquer une pluralité de deuxièmes variantes du composant en matière plastique.

8. Procédé selon l'une quelconque des revendications précédentes,
**caractérisé en ce que** la couche décorative (2) de la première variante est une peau en matière plastique.

9. Procédé selon l'une quelconque des revendications précédentes,
**caractérisé en ce que** la couche décorative (4, 5) de la deuxième variante présente une couche élastique inférieure (4) tournée vers la couche de mousse (3) et une couche supérieure en cuir synthétique ou véritable (5) reliée à la couche élastique (4), ou **en ce que** la couche décorative de la deuxième variante consiste en une couche monocouche en cuir synthétique ou naturel.

10. Procédé selon l'une quelconque des revendications précédentes,
**caractérisé en ce que** la couche décorative (4, 5) de la deuxième variante est collée sur la couche de mousse (3).
